# EUROPEAN PATENT APPLICATION

(11) **EP 1 997 671 A2**
(43) Date of publication of application: **03.12.2008**
(21) Application number: 08152931.5
(22) Date of filing: 18.03.2008
(51) Int. Cl.: B60N 2/28

(54) **Seat belt clamp apparatus for use with child seat and child seat**

(30) Priority: 30.05.2007 JP 2007143688
(71) Applicant: TAKATA CORPORATION, Minato-ku, Tokyo 106-8510 (JP)
(72) Inventor: Nakagawa, Osamu, Tokyo 106-8510 (JP); Sakumoto, Masayuki, Tokyo 106-8510 (JP)
(74) Representative: Vossius & Partner

(57) **Abstract**

To provide a seat belt clamp apparatus for use with a child seat capable of locking a seat belt by strongly sandwiching the same, and a child seat provided with the seat belt clamp apparatus for use with a child seat.

A seat belt clamp apparatus (40) is provided with a frame body (41) that is attached to a standing upright portion (34b), a belt passageway (42) for inserting the shoulder belt (23a), which is formed in the frame body (41), a belt-locking apparatus (43) for locking the shoulder belt (23a) that is inserted into the belt passageway (42), a belt doorway (44) for feeding the shoulder belt (23a) into and out from the belt passageway (42), which is formed in the frame body (41), and a coapling member (45) for coupling the end portions of the frame body (41) facing each other across the belt doorway (44). The end portions of the frame body (41) facing each other across the belt doorway (44) are coupled with each other by the coupling member (45), after inserting the shoulder belt (23a) into the belt passageway (42) through the belt doorway (44).

## Description

The present invention relates to a seat belt clamp apparatus for use with a child seat for securing a child seat to a vehicle seat with a seat belt for use in a vehicle, and a child seat provided with the seat belt clamp apparatus for use with a child seat.

A hitherto known example of a child seat provided with a seat belt clamp apparatus for use with a child seat (Japanese Unexamined Patent Application Publication No. 2001-347860) will be explained referring to Fig. 18 through Fig. 23.

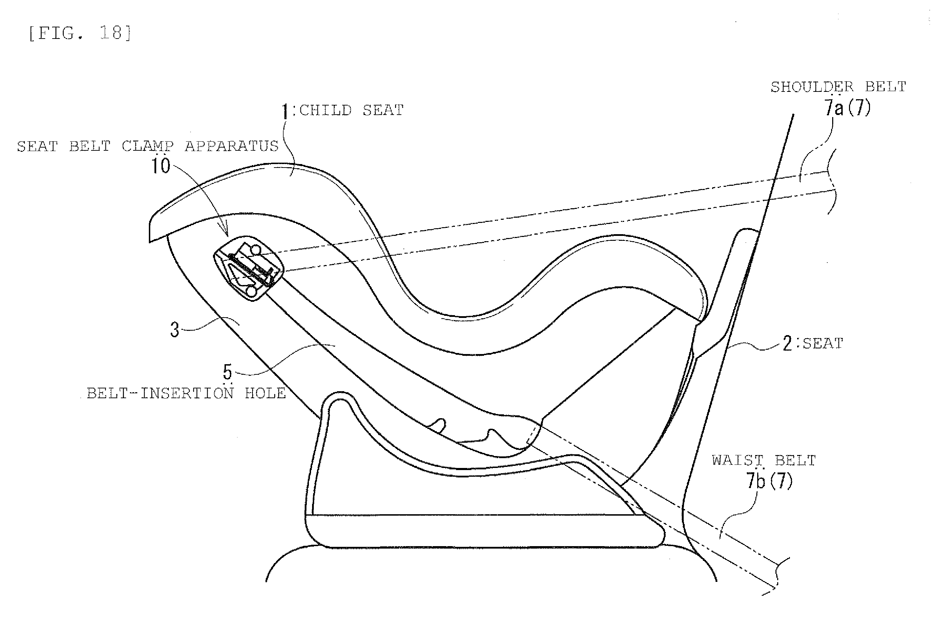

As illustrated in Fig. 18, seat belt clamp apparatuses 10 are respectively mounted on upper portions of belt insertion holes 5 that are formed at both sides of a back portion 3 of a child seat 1. The child seat 1 is mounted on a seat 2 while facing backward relative to a proceeding direction of a vehicle. A shoulder belt 7a of a seat belt 7 is inserted through the seat belt clamp apparatus 10 mounted on a door side of the child seat 1, and a waist belt 7b is inserted through lower portions of both of left and right belt insertion holes 5 and 5 of the child seat 1. Then, a non-illustrated tongue is latched with a buckle and thus the child seat 1 is secured to the seat 2.

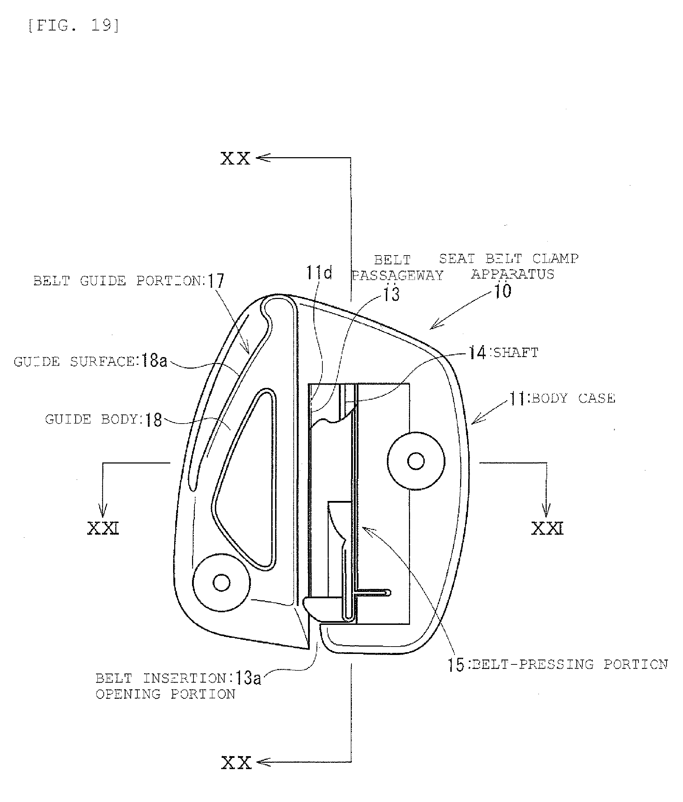

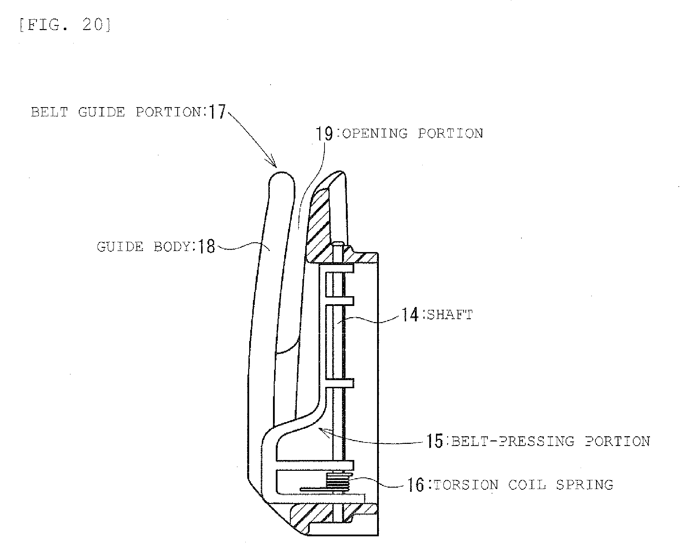

As illustrated in Fig. 19 through Fig. 21, the seat belt clamp apparatus 10 is composed of a body case 11, a belt passageway 13 that is formed in a longitudinal direction at a center portion in the body case 11, a belt-pressing portion 15 that is rotatably supported by a shaft 14 in a manner such that the belt passageway 13 is opened and closed, and a belt guide portion 17 that is disposed at a position facing the belt-pressing portion 15.

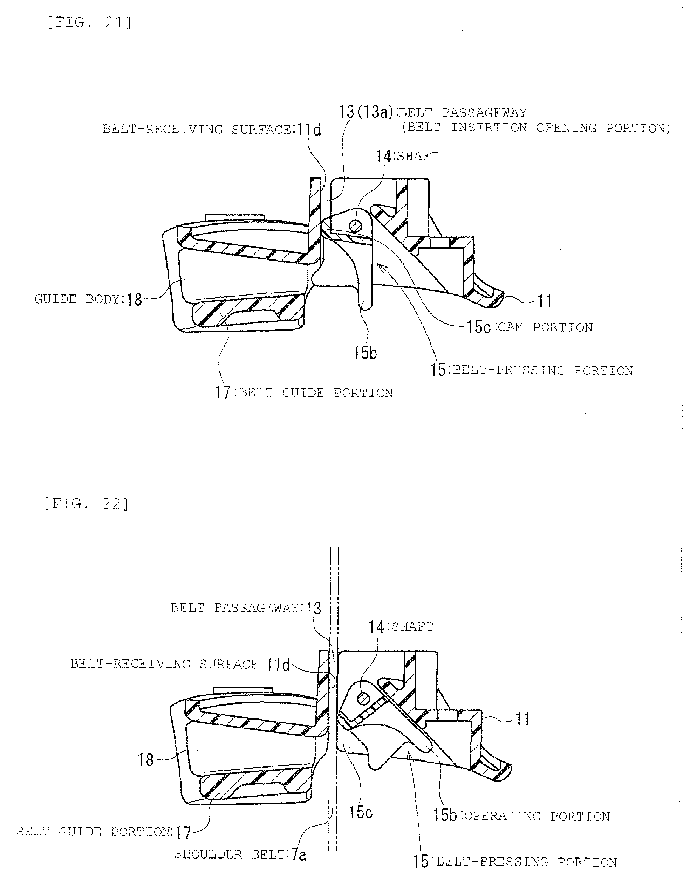

As illustrated in Fig. 22, when the shoulder belt 7a is inserted through the seat belt clamp apparatus 10, an operating portion 15b of the belt-pressing portion 15 is pressed with a hand and fingers, and is rotated counterclockwise around the shaft 14 as a center, and the belt-pressing portion 15 is spaced apart from the belt guide portion 17. In this state, the shoulder belt 7a is pulled into the belt passageway 13 from a belt insertion opening portion 13a.

The shoulder belt 7a is latched with a guide surface 18a of a guide body 18 after inserting the shoulder belt 7a into an opening portion 19 of the belt guide portion 17 from above in a state where the shoulder belt 7a is slightly released. By means of that the shoulder belt 7a is latched with the guide surface 18a, a tension force of the shoulder belt 7a is applied to the guide surface 18a, and the belt guide portion 17 is pressed to the seat 2 side.

When the shoulder belt 7a is inserted through the seat belt clamp apparatus 10 and the tongue is latched with the buckle, the seat belt 7 is strained by pulling the shoulder belt 7a and the waist belt 7b, and thereafter the tongue is latched with the buckle. Further, when the hand and fingers are taken off from the operating portion 15b in this state, a cam portion 15c of the belt-pressing portion 15 is rotated toward the belt guide portion 17 side by means of a biasing force of a torsion coil spring 16. The shoulder belt 7a is sandwiched and locked between the cam portion 15c and a belt-receiving surface 11d at a belt guide portion 17 side of the belt passageway 13. Thereby, the child seat 1 is pressed to the seat 2 side by means of a tension force of the seat belt 7 and is secured to the seat 2.

In a case that the child seat 1 being thus secured to the seat 2 is detached, the operating portion 15b is pressed by the hand and fingers and the belt-pressing portion 15 is spaced apart from the belt guide portion 17. Thereby, the seat belt 7 becomes to be able to freely pass through the belt passageway 13. Consequently, the seat belt 7 is released and the buckle is taken off.

In the aforementioned hitherto known seat belt clamp apparatus for use with a child seat, the belt insertion opening portion 13a is opened and the body case 11 has a downwardly facing C-shape. That is, any of the belt-pressing portion 15 and the belt guide portion 17 is in a cantilevered state. Hence, in a case that the seat belt 7 is sandwiched between the belt-pressing portion 15 and the belt guide portion 17, both of that are slightly deformed in a direction where both of that are spaced apart, and the sandwiching state for the seat belt 7 becomes loose. Specifically, when a creep deformation occurs at an upper portion of the body case 11 that is connecting the belt-pressing portion 15 and the belt guide portion 17, the sandwiching state for the seat belt 7 becomes loose.

It is an object of the present invention to solve the aforementioned hitherto known problems and to provide a seat belt clamp apparatus for use with a child seat capable of strongly sandwiching a seat belt and locking the same, and to provide a child seat provided with the seat belt clamp apparatus for use with the child seat.

A seat belt clamp apparatus for use with a child seat according to the present invention (Claim 1) is characterized in that a seat belt clamp apparatus for use with a child seat for securing the child seat to a vehicle seat by locking a seat belt of a vehicle, inserted into the child seat includes a frame body mounted on the child seat, a belt passageway for inserting the seat belt, formed in the frame body, a belt-locking apparatus capable of entering a state where the seat belt inserted into the belt passageway is locked by sandwiching, and a belt-unlocking state allowing the seat belt to pass through, and a belt doorway for feeding the seat belt into and out from the belt passageway, and the seat belt clamp apparatus for use with the child seat further includes a coupling member capable of entering a coupled state where end portions of the frame body facing each other across the belt doorway are coupled, and a coupling-released state where the belt doorway is in an open state.

The seat belt clamp apparatus for use with a child seat according to Claim 2 is characterized in that the seat belt clamp apparatus for use with a child seat according to Claim 1 further comprises an operating piece for performing a coupling operation, and a coupling-releasing operation for the coupling member, and an interlocking apparatus for allowing the belt-locking apparatus to be in the belt-locking state when the coupling operation of the operating piece is performed.

The seat belt clamp apparatus according to Claim 3 is characterized in that in the seat belt clamp apparatus for use with a child seat according to Claim 2, the interlocking apparatus allows the belt-locking apparatus to be in the belt-unlocking state when the coupling-releasing operation of the operating piece is performed.

A child seat according to the present invention (Claim 4) includes the seat belt clamp apparatus for use with a child seat according to any one of Claims 1 through 3.

In a seat belt clamp apparatus for use with a child seat according to the present invention, end portions facing each other across the belt doorway of the frame body are coupled by a coupling member.

Hence, in a case that a seat belt is sandwiched by means of a belt-locking apparatus, the end portions facing each other across the belt doorway are blocked from being spaced apart, and the seat belt is strongly sandwiched by means of the belt-locking apparatus.

Incidentally, in a case that a coupling operation by the coupling member is released, the seat belt can be fed into and out from the belt passageway through the belt doorway.

According to Claim 2, when the coupling member is brought to a coupled state by means of an operating piece, the belt-locking apparatus is brought to a belt-locking state, and thereby another operation for locking the belt-locking apparatus is not necessary.

According to Claim 3, when the coupling operation of the coupling member is released by the operating piece, the belt-locking apparatus is brought to a belt-unlocking state, and thereby another operation for allowing the belt-locking apparatus to form the belt-unlocking state is not necessary.

Hereinbelow, an embodiment of the present invention will be explained with reference to the drawings.
[Fig. 1] Fig. 1(a) and Fig. 1(b) are a side view and a perspective view illustrating a child seat provided with a seat belt clamp apparatus for use with a child seat according to the embodiment.
[Fig. 2] Fig. 2 is a perspective view illustrating a coupled state of end portions of a frame body of the seat belt clamp apparatus of Fig. 1.
[Fig. 3] Fig. 3 is a perspective view illustrating a coupling-released state of the end portions of the frame body of the seat belt clamp apparatus of Fig. 1.
[Fig. 4] Fig. 4 is a perspective view illustrating a belt-locking state of the seat belt clamp apparatus of Fig. 1.
[Fig. 5] Fig. 5 is a perspective view illustrating a belt-unlocking state of the seat belt clamp apparatus of Fig. 1.
[Fig. 6] Fig. 6(a) and Fig. 6(b) are a side view and a cross-sectional view respectively illustrating the coupled state of the end portions of the frame body and the belt-locking state of the seat belt clamp apparatus of Fig. 1.
[Fig. 7] Fig. 7(a) and Fig. 7(b) are a side view and a cross-sectional view respectively illustrating a halfway state of the coupling-releasing operation for the end portions of the frame body and a releasing operation for the belt-locking state of the seat belt clamp apparatus, of Fig. 1.
[Fig. 8] Fig. 8(a) and Fig. 8(b) are a side view and a cross-sectional view respectively illustrating the coupling-released state of the end portions of the frame body and the belt-unlocking state of the seat belt clamp apparatus of Fig. 1.
[Fig. 9] Fig. 9(a) and Fig. 9(b) are a cross-sectional view taken along a line IXA-IXA of Fig. 6(a), and a cross-sectional view taken along a line IXB-IXB of Fig. 8(a), respectively.
[Fig. 10] Fig. 10 is a front elevation illustrating a standing upright portion of a shell folder of the child seat of Fig. 1.
[Fig. 11] Fig. 11 is a perspective view illustrating a coupled state of end portions of a frame body of a seat belt clamp apparatus for use with a child seat according to another embodiment.
[Fig. 12] Fig. 12 is a perspective view illustrating a coupling-released state of the end portions of the frame body of the seat belt clamp apparatus of Fig. 11.
[Fig. 13] Fig. 13 is a perspective view illustrating a belt-locking state of the seat belt clamp apparatus of Fig. 11.
[Fig. 14] Fig. 14 is a perspective view illustrating a belt-unlocking state of the seat belt clamp apparatus of Fig. 11.
[Fig. 15] Fig. 15(a) and Fig. 15(b) are a side view and a cross-sectional view illustrating the belt-locking state of the seat belt clamp apparatus of Fig. 11.
[Fig. 16] Fig. 16(a) and Fig. 16(b) are a side view and a cross-sectional view illustrating the belt-unlocking state of the seat belt clamp apparatus of Fig. 11.
[Fig. 17] Fig. 17(a) and Fig. 17(b) are front elevations respectively illustrating the coupled state of the end portions of the frame body, and the coupling-released state of the end portions of the frame body of the seat belt clamp apparatus of Fig. 11.
[Fig. 18] Fig. 18 is a side view illustrating a child seat provided with a seat belt clamp apparatus for use with a child seat according to a hitherto known example.
[Fig. 19] Fig. 19 is a front elevation illustrating a seat belt clamp apparatus of Fig. 18.
[Fig. 20] Fig. 20 is a cross-sectional view taken along a line XX-XX of Fig. 19.
[Fig. 21] Fig. 21 is a cross-sectional view taken along a line XXI-XXI of Fig. 19.
[Fig. 22] Fig. 22 is a cross-sectional view of the same portion as that of Fig. 21 illustrating a belt-locking state.

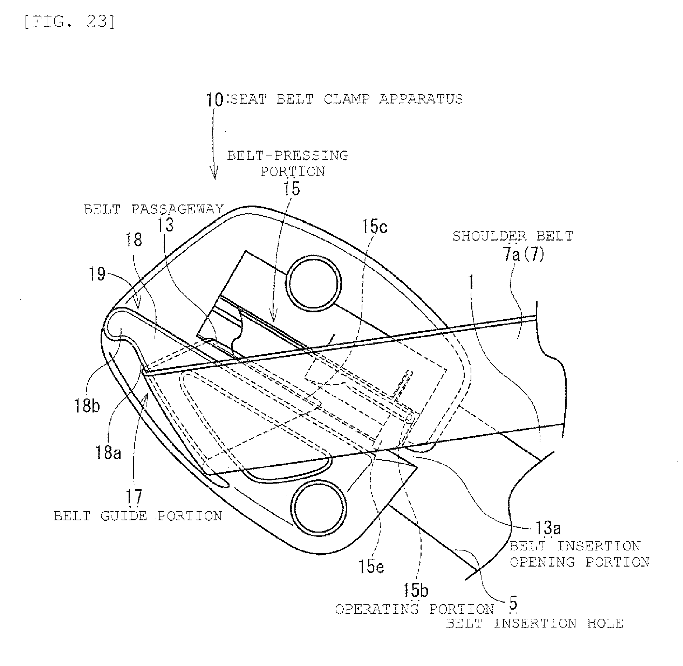

[Fig. 23] Fig. 23 is a front elevation illustrating a belt-locking state of the seat belt clamp apparatus of Fig. 18.

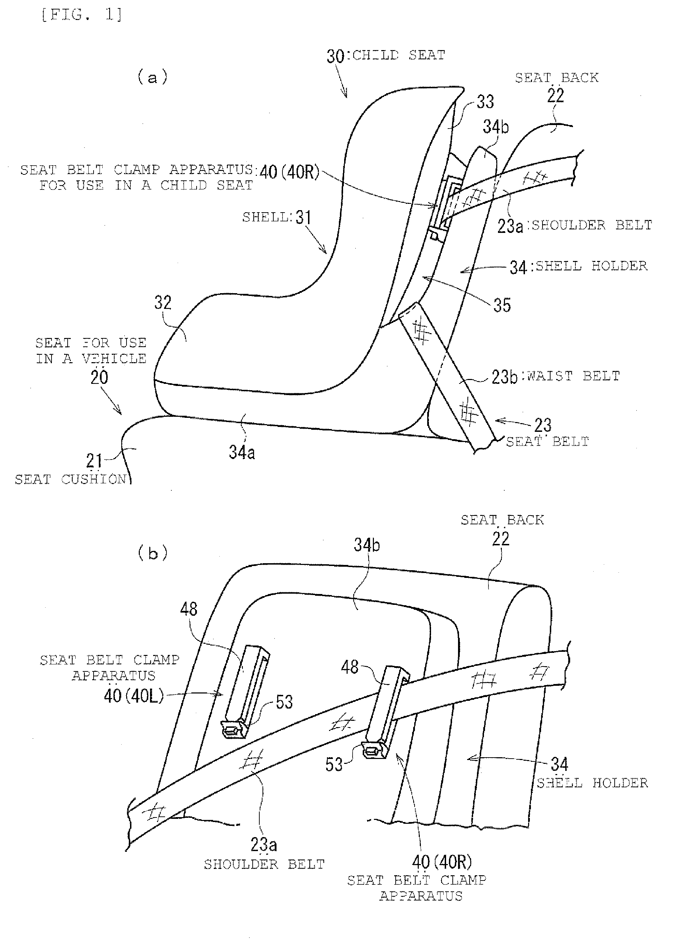

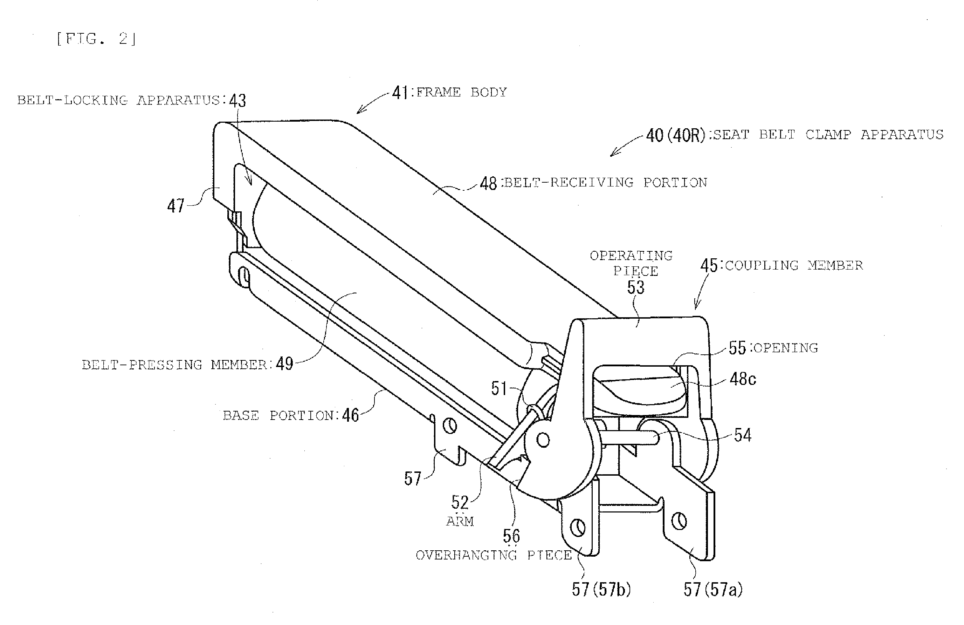

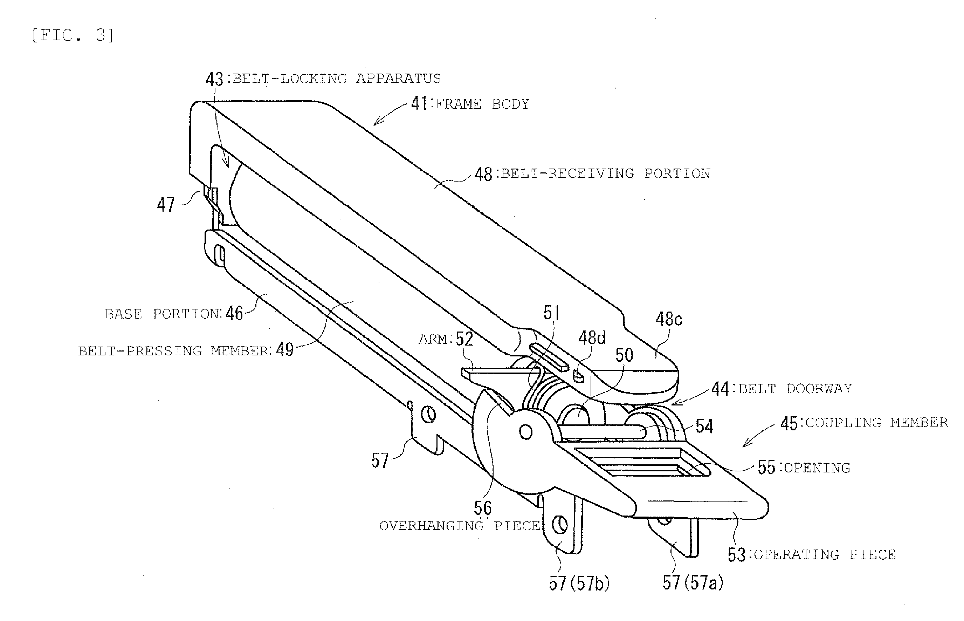

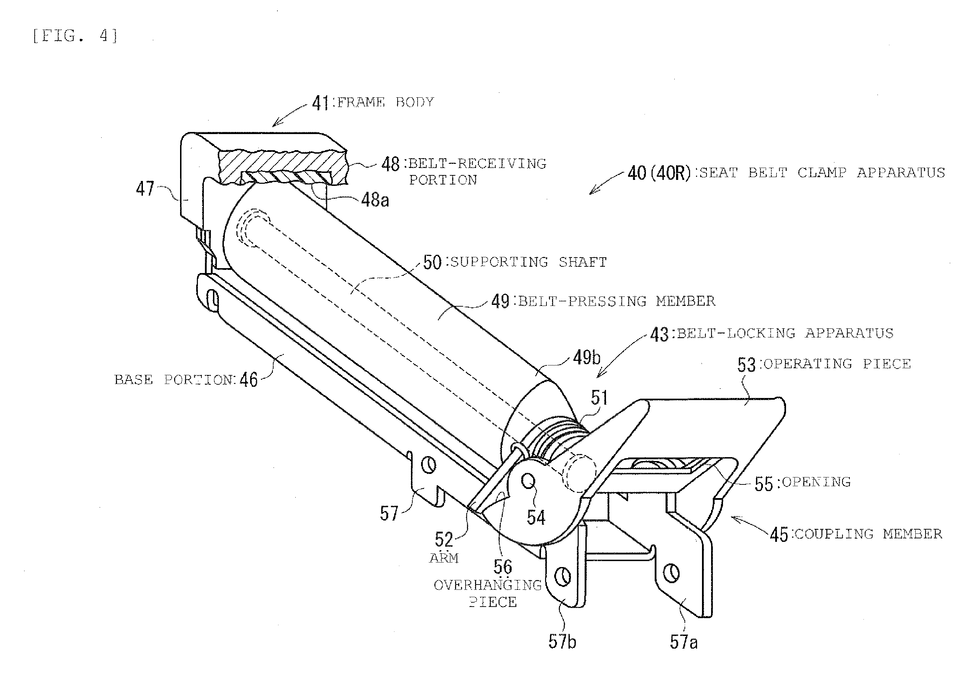

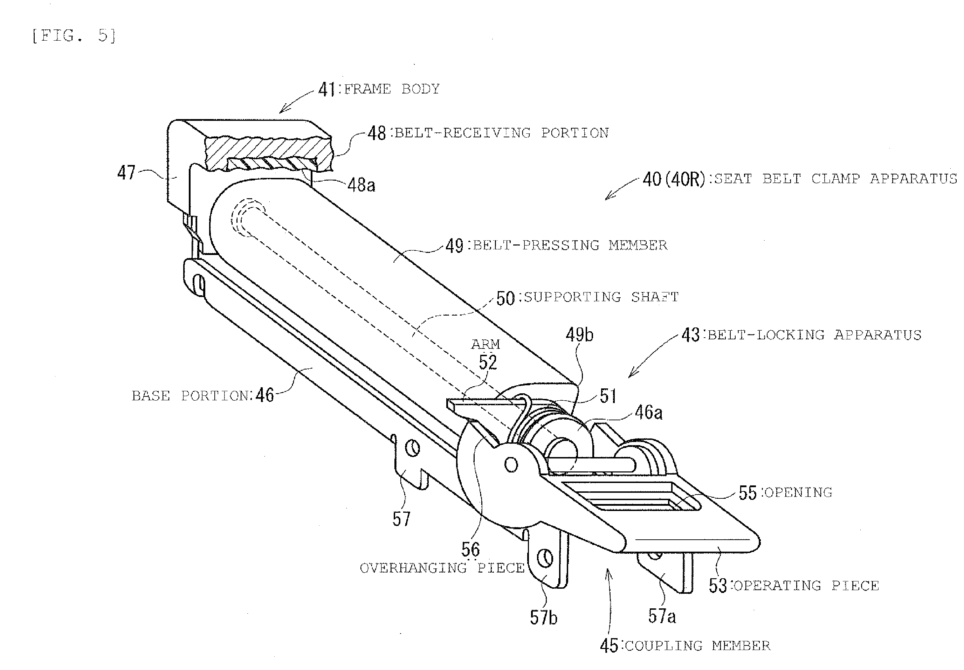

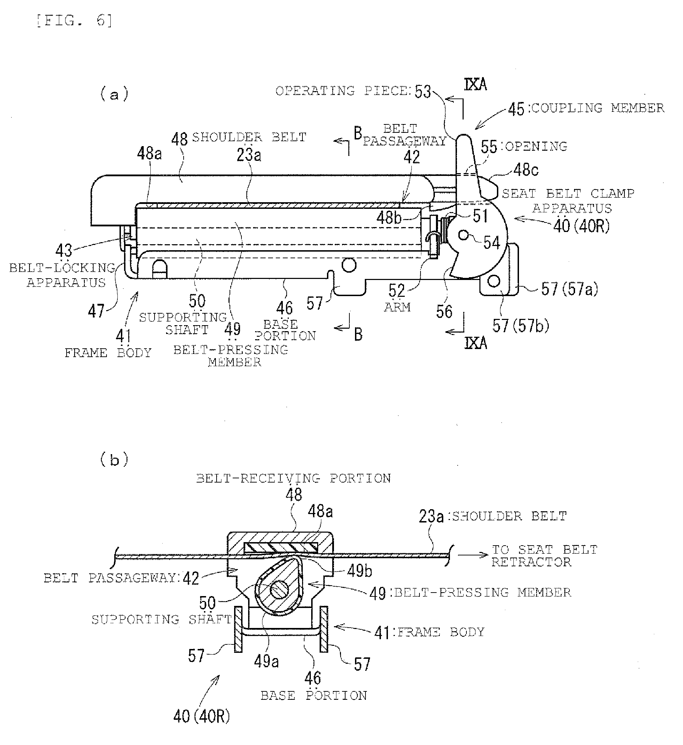

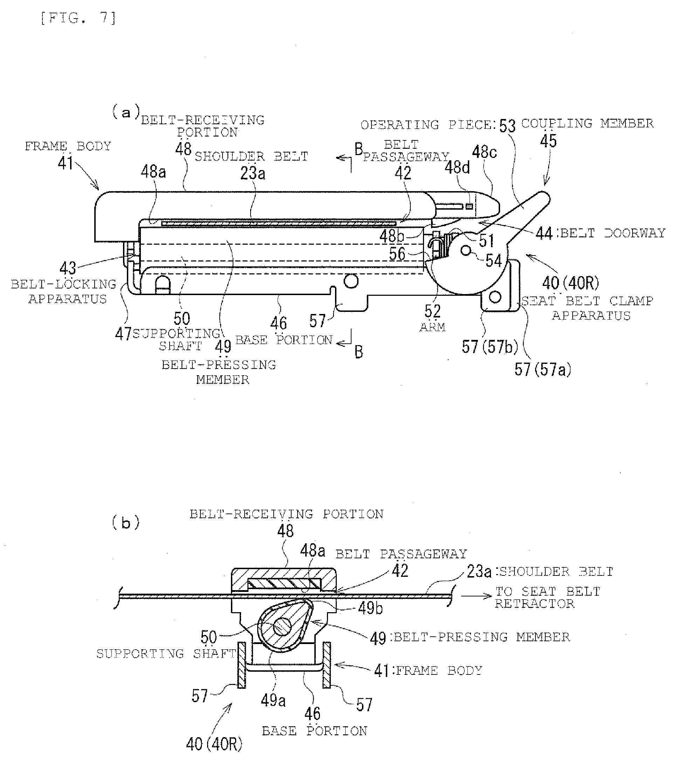

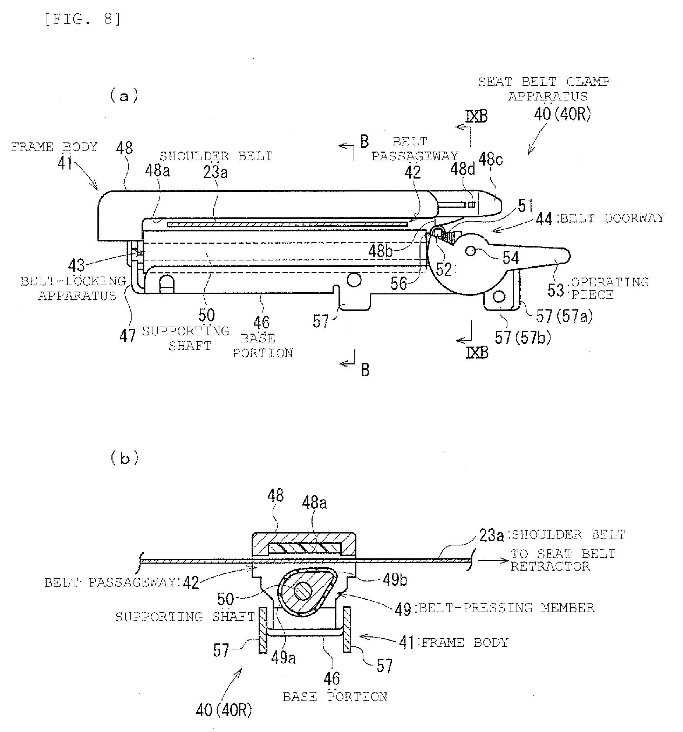

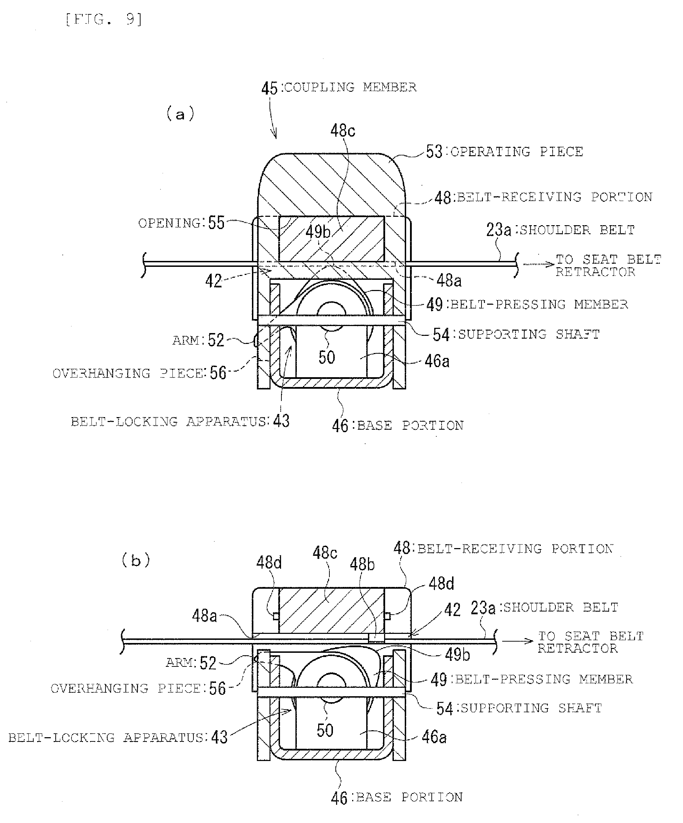

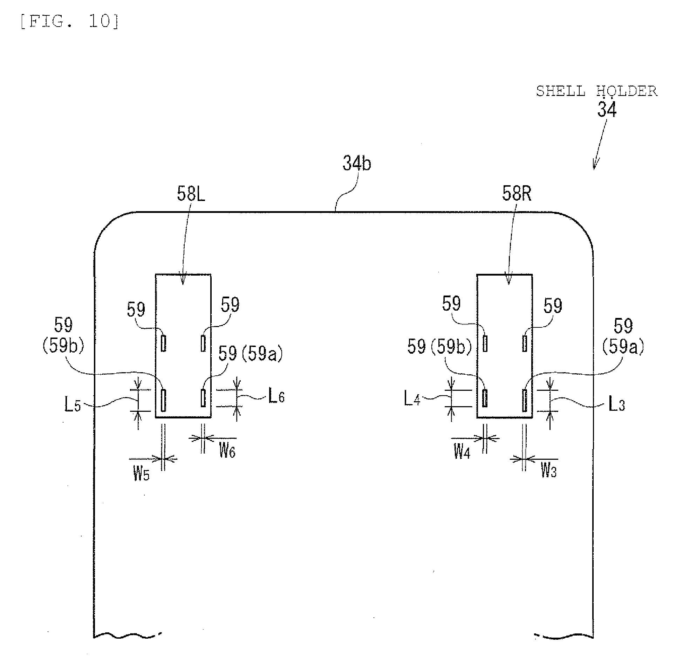

Fig. 1(a) is a side view illustrating a child seat provided with a seat belt clamp apparatus for use with a child seat according to the embodiment, Fig. 1(b) is a perspective view illustrating the vicinity of the seat belt clamp apparatus of the child seat, Fig. 2 is a perspective view illustrating a coupled state of end portions of a frame body of the seat belt clamp apparatus, Fig. 3 is a perspective view illustrating a coupling-released state of the end portions of the frame body of the seat belt clamp apparatus. Fig. 4 is a perspective view illustrating a belt-locking state of the seat belt clamp apparatus, Fig. 5 is a perspective view illustrating a belt-unlocking state of the seat belt clamp apparatus, Fig. 6(a) is a side view illustrating the coupled state of the end portions of the frame body and the belt-locking state of the seat belt clamp apparatus, Fig. 6(b) is a cross-sectional view taken along a line B-B of Fig. 6(a), Fig. 7(a) is a side view illustrating a halfway state of the coupling-releasing operation for the end portions of the frame body of the seat belt clamp apparatus and a halfway state of a releasing operation for the belt-locking state, Fig. 7(b) is a cross-sectional view taken along a line B-B of Fig. 7(a), Fig. 8 (a) is a side view illustrating the coupling-released state of the end portions of the frame body and the belt-unlocking state of the seat belt clamp apparatus, Fig. 8(b) is a cross-sectional view taken along a line B-B of Fig. 8(a), Fig. 9(a) is a cross-sectional view taken along a line IXA-IXA of Fig. 6 (a), Fig. 9(b) is a cross-sectional view taken along a line IXB-IXB of Fig. 8(a), and Fig. 10 is a front elevation illustrating a standing upright portion of a shell folder of the child seat.

Incidentally, in Fig. 1(b), an illustration of a shell of the child seat is omitted. Further, in Fig. 4 and Fig. 5, an illustration of a belt-receiving surface of the frame body is omitted. In Fig. 10, an illustration of the seat belt clamp apparatus is omitted.

In an explanation below, a left and right direction is conformed to a left and right direction of a vehicle seat on which the child seat is mounted, looking from a front face. In Fig. 2 through Fig. 5, the seat belt clamp apparatus is illustrated such that an upside of a paper surface is conformed to a front side of the child seat, a lower side of the paper surface is conformed to a rear side of the child seat, a back side of the paper surface is conformed to an upside of the child seat, and a front side of the paper surface is conformed to a lower side of the child seat, respectively. Furthermore, in Fig. 6 (a), Fig. 7(a), and Fig. 8(a), the seat belt clamp apparatus is illustrated such that an upside of the paper surface is conformed to a front side of the child seat, a lower side of the paper surface is conformed to a back side of the child seat, a left side of the paper surface is conformed to an upside of the child seat, and a right side of the paper surface is conformed to a lower side of the child seat, respectively.

As illustrated in Fig. 1(a), a seat 20 for use in a vehicle is provided with a seat cushion 21 and a seat back 22. A seat belt 23 of the seat 20 is a three-point type seat belt provided with a shoulder belt 23a that is diagonally pulled around a front face side of the seat back 22, and a waist belt 23b that is pulled around in a left-and-right direction above the seat cushion 21 when it is worn. In this embodiment, the shoulder belt 23a is pulled around from an upper right to a lower left of the seat back 22 (the left-and-right direction is that of the seat 20 looking from a front face as in Fig. 1(b) and is opposite to that for an occupant seated on the seat 20, and the same as above).

Incidentally, an end portion of a shoulder belt 23a side of the seat belt 23 is connected to a seat belt retractor (illustration is omitted) mounted on a vehicle body so that the shoulder belt 23a can be retracted and pulled out, and an end portion of a waist belt 23b side is coupled with a vehicle body floor by means of a lap anchor (illustration is omitted). Any of the seat belt retractor and the lap anchor is disposed at the same side (right side in this embodiment) in a left and a right side of the seat 20.

Moreover, the seat belt 23 is hooked through a through anchor and a tongue (both of those are not illustrated).
The through anchor is disposed nearer the seat belt retractor in relation to the tongue, and is attached to an upper portion of a pillar of the vehicle body and the seat back 22, or the like at the same side of the seat belt retractor of the seat 20. When the seat belt 23 is worn, the tongue is latched with a buckle apparatus (illustration is omitted) mounted on an opposite side of the seat belt retractor of the seat 20 and the lap anchor. In this worn state, a portion in the seat belt 23 situated at the through anchor side from the tongue serves as the shoulder belt 23a, and that situated at the lap anchor side from the tongue serves as the waist belt 23b.

As illustrated in Fig. 1(a), a child seat 30 in this embodiment is provided with a shell 31 including a seat portion 32 and a backrest portion 33, and a shell holder 34 that supports the shell 31. The shell 31 and the shell holder 34 are configured to be separatable. The shell holder 34 is provided with a base 34a disposed on the seat cushion 21 of the seat 20 for use in the vehicle, and a standing upright portion 34b rising up along a front face of the seat back 22 of the seat 20 for use in the vehicle from a back portion of the base 34a.

As illustrated in Fig. 1(a), in this embodiment, a gap 35 is formed between the backrest portion 33 of the shell 31 and the standing upright portion 34b of the shell holder 34 in a state where the shell 31 is coupled with the shell holder 34. The aforementioned shoulder belt 23a and the waist belt 23b are passed through the gap 35.

A seat belt clamp apparatus 40 for fixing the shoulder belt 23a is provided on an upper portion of a front face of the standing upright portion 34b. In this embodiment, two seat belt clamp apparatuses 40 (40L and 40R) are disposed at different positions of left and right. In the case that the shoulder belt 23a is pulled around from the upper right to the lower left of the seat back 22, the shoulder belt 23a is clamped by the seat belt clamp apparatus 40R at the right side of the front face of the standing upright portion 34b as illustrated in Fig. 1(b). In the case that the shoulder belt 23a is pulled around from the upper left to the lower right of the seat back 22, the shoulder belt 23a is clamped by the seat belt clamp apparatus 40L at the left side of the front face of the standing upright portion 34b.

A construction of the seat belt clamp apparatus 40 will be explained below. Incidentally, in Fig. 2 through Fig. 9(a) and 9(b), although the seat belt clamp apparatus 40R disposed at the right side of the front face of the standing upright portion 34b is illustrated, the seat belt clamp apparatus 40L disposed at the left side of the front face of the standing upright portion 34b has the same construction as that of the seat belt clamp apparatus 40R at the right side, other than that the seat belt clamp apparatus 40L is left-right symmetrical with the seat belt clamp apparatus 40R at the right side.

The seat belt clamp apparatus 40 is provided with a frame body 41 to be attached to the standing upright portion 34b, a belt passageway 42 for inserting the shoulder belt 23a, formed in the frame body 41, a belt-locking apparatus 43 for locking the shoulder belt 23a inserted through the belt passageway 42, a belt doorway 44 for feeding the shoulder belt 23a into and out from the belt passageway 42 formed in the frame body 41, a coupling member 45 for coupling end portions of the frame body 41 facing each other across the belt doorway 44, and so forth.

In this embodiment, the frame body 41 is provided with a base portion 46 disposed along the front face of the standing upright portion 34b, a front extending portion 47 that is extending from an upper end of the base portion 46 to a front side of the child seat 30, and a belt-receiving portion 48 extending downward from a front end of the front extending portion 47. The frame body 41 has a downwardly facing C-shape in which a space between each of lower end portions of the base portion 46 and the belt-receiving portion 48 is downwardly opened. As illustrated in Figs. 2 and 3, in this embodiment, the base portion 46 and the belt-receiving portion 48 are formed of a belt plate shape respectively extending in approximately upper and lower direction, and the same are disposed substantially in parallel with each other at an interval in a front-and-back direction.

A space between the base portion 46 and the belt-receiving portion 48 serves as the belt passageway 42, and an open portion between each of the lower end portions of the base portion 46 and the belt-receiving portion 48 serves as the belt doorway 44 for feeding the shoulder belt 23a into and out from the belt passageway 42. A back surface of the belt-receiving portion 48 facing the belt passageway 42 serves as a belt-receiving surface 48a that sandwiches the shoulder belt 23a between a belt-pressing member 49, described later, and the same.

As illustrated in Fig. 6(a), a claw 48b is projected from the vicinity of a lower end of the belt-receiving surface 48a toward an inside of the belt passageway 42. The claw 48b is provided for latching the shoulder belt 23a, which is pulled inside the belt passageway 42 from the belt doorway 44, in the belt passageway 42.

The belt-locking apparatus 43 is provided with the belt-pressing member 49 disposed in the belt passageway 42 of the frame body 41, a supporting shaft 50 supporting the belt-pressing member 49 to be rotatable in an approaching and separating direction in relation to the belt-receiving surface 48a, and a coil spring 51 biasing the belt-pressing member 49 toward an approaching direction to the belt-receiving surface 48a. The shoulder belt 23a is passed through a space between the belt-pressing member 49 and the belt-receiving portion 48.

The supporting shaft 50 is extending in the belt passageway 42 substantially in parallel with the belt-receiving surface 48a in approximately upper and lower direction. An upper end side of the supporting shaft 50 is held by a bearing hole (illustration is omitted) provided in the aforementioned front extending portion 47, and a lower end side thereof is held by a bearing piece 46a standing up from the base portion 46.

In this embodiment, the belt-pressing member 49 is concentrically disposed with the supporting shaft 50, as illustrated in Fig. 6(b), Fig. 7(b), and Fig. 8(b), and is formed of a cam shape including a base portion 49a having approximately cylindrical shape, which is rotatably supported by the supporting shaft 50, and an overhanging portion 49b laterally overhanging from an outer peripheral surface of the base portion 49a.

The belt-pressing member 49 is provided in the belt passageway 42 at a posture where the overhang portion 49b is overhanging from the base portion 49a toward a right side of the child seat 30 in the seat belt clamp apparatus 40R at the right side, as illustrated in Fig. 6(b), Fig. 7(b), and Fig. 8(b).

As described above, the shoulder belt 23a that is pulled around from the upper right to the lower left of the seat back 22 is passed through the belt passageway 42 of the seat belt clamp apparatus 40R at the right side. Hence, the belt-pressing member 49 is rotated in a direction where the shoulder belt 23a, which is passed through the belt passageway 42 of the seat belt clamp apparatus 40R, is pulled out from the seat belt retractor. Thereby, the overhanging portion 49b approaches the belt-receiving surface 48a and the shoulder belt 23a is sandwiched between the overhanging portion 49b and the belt-receiving surface 48a, as illustrated in Fig. 6(b) through Fig. 8(b).

Accordingly, in a state where the shoulder belt 23a is sandwiched between the overhanging portion 49b of the belt-pressing member 49 and the belt-receiving surface 48a, even when the shoulder belt 23a is tried to be passed through the belt passageway 42 in a direction where the shoulder belt 23a is pulled out from the seat belt retractor, the belt-pressing member 49 also tends to rotate in the same direction as that. Thereby, a portion between the overhanging portion 49b of the belt-pressing member 49 and the belt-receiving surface 48a is tightly fastened, and thereby the shoulder belt 23a is blocked to pass through in a pulling out direction from the seat belt retractor. Thus, a looseness of the shoulder belt 23a is assuredly prevented from occurring.

Although the illustration is omitted, in the seat belt clamp apparatus 40L at the left side, the belt-pressing member 49 is provided in the belt passageway 42 in a posture where the overhanging portion 49b is overhanging toward a left side of the child seat 30 from the base portion 49a.

As described above, in the belt passageway 42 of the seat belt clamp apparatus 40L at the left side, the shoulder belt 23a that is pulled around from the upper left to the lower right of the seat back 22 is passed. Hence, in the seat belt clamp apparatus 40L at the left side, the belt-pressing member 49 is also rotated in a direction where the shoulder belt 23a, which is passed through the belt passageway 42 of the seat belt clamp apparatus 40L, is pulled out from the seat belt retractor. Thereby, the overhanging portion 49b approaches the belt-receiving surface 48a and the shoulder belt 23a is sandwiched between the overhanging portion 49b and the belt-receiving surface 48a.

Accordingly, also in the seat belt clamp apparatus 40L at the left side, in a state where the shoulder belt 23a is sandwiched between the overhanging portion 49b of the belt-pressing member 49 and the belt-receiving surface 48a, even when the shoulder belt 23a is tried to be passed through the belt passageway 42 in a direction where the shoulder belt 23a is pulled out from the seat belt retractor, the belt-pressing member 49 also tends to rotate in the same direction as that. Thereby, a portion between the overhanging portion 49b of the belt-pressing member 49 and the belt-receiving surface 48a is tightly fastened, and thereby the shoulder belt 23a is blocked to pass through in a pulling out direction from the seat belt retractor. Thus, the looseness of the shoulder belt 23a is assuredly prevented from occurring.

Hereinbelow, a state where the shoulder belt 23a is thus sandwiched between the overhanging portion 49b of the belt-pressing member 49 and the belt-receiving surface 48a is referred to as belt-locking state, and a state where the belt-pressing member 49 is rotated backward from the belt-locking state and is separated from the belt-receiving surface 48a, and the shoulder belt 23a is released from being sandwiched is referred to as a belt-unlocking state.

As illustrated in Fig. 4 and Fig. 5, in this embodiment, an arm 52 extending from a lower end side of the base portion 49a of the belt-pressing member 49 toward a direction opposite to an overhanging direction of the overhanging portion 49b from the base portion 49a is projected.

The coil spring 51 is disposed in a manner so as to surround the lower end of the base portion 49a, and one end of that is hooked on the base portion 46 and the other end of that is hooked on the vicinity of a root of the arm 52. The coil spring 51 biases the arm 52 to rotate backward. In other words, in this embodiment, the coil spring 51 biases the belt-pressing member 49 to rotate forward via the arm 52.

The coupling member 45 is provided with an operating piece 53 whose one end is coupled with a lower end of the base portion 46 in a manner so as to be able to rotate in an upper-and-lower direction by means of a supporting shaft 54, an opening 55 that is formed in the operating piece 53 for receiving a lower end portion 48c of the belt-receiving portion 48 when the operating piece 53 is rotated upward, and an overhanging piece 56 overhanging toward a backside of the aforementioned arm 52 from a base end side of the operating piece 53 so that the coupling member 45 can take a posture extending forward from the lower end of the base portion 46, and a posture extending downward from the lower end of the base portion 46.

As illustrated in Fig. 2 and Fig. 6(a), the lower end portion of the base portion 46 of the frame body 41 and the lower end portion 48c of the belt-receiving portion 48 are brought to a coupled state via the operating piece 53 and the supporting shaft 54 by means of that the operating piece 53 is rotated upward and the lower end portion 48c of the belt-receiving portion 48 is engaged with the opening 55.
In this coupled state, the belt doorway 44 of the frame body 41 is closed by the operating piece 53.

Further, the lower end portion 48c of the belt-receiving portion 48 gets out from an inside of the opening 55 by means of that the operating piece 53 is rotated downward as illustrated in Fig. 3 and Fig. 8(a) from the state illustrated in Fig. 2 and Fig. 6(a), and the coupling of the lower end portion 48c of the belt-receiving portion 48 and the lower end portion of the base portion 46 is brought to a released state (coupling-released state). In this coupling-released state, the belt doorway 44 is opened.

Incidentally, as illustrated in Fig. 3, a left and right width of the lower end portion 48c of the belt-receiving portion 48 is reduced compared to a portion upper than the same. A left and right width of the opening 55 is configured to be slightly larger than that of the lower end portion 48c. On left and right side surfaces of the lower end portion 48c, projections 48d to be elastically engaged with left and right side edges of the opening 55 when the lower end portion 48c is inserted into the opening 55 are provided.

The overhanging piece 56 is spaced apart from the arm 52 when the operating piece 53 is in the coupled state as illustrated in Fig. 2 and Fig. 6(a). Hence, in this state, as illustrated in Fig. 9(a), the belt-pressing member 49 is rotated forward by means of a biasing force of the coil spring 51, and the shoulder belt 23a is sandwiched between the overhanging portion 49b and the belt-receiving surface 48a. In addition, the arm 52 is in a state of being rotated backward in reverse relation to the overhanging portion 49b.

When the operating piece 53 is rotated downward from the coupled state, as illustrated in Fig. 4 and Fig. 5, the overhanging piece 56 is brought into contact with the arm 52 from backside and the arm 52 is rotated forward. Along with this operation, as illustrated in Fig. 9(b), the belt-pressing member 49 is rotated backward and the overhanging portion 49b of the belt-pressing member 49 is brought to be spaced apart from the belt-receiving surface 48a. Thereby, the sandwiching of the shoulder belt 23a by the overhanging portion 49b of the belt-pressing member 49 and the belt-receiving surface 48a is released.

That is, in the seat belt clamp apparatus 40, when the operating piece 53 is in the coupled state, the belt-locking apparatus 43 is in a belt-locking state, and when the operating piece 53 is brought to be in the coupling-released state, the belt-locking apparatus 43 is brought to the belt-unlocking state.

In this embodiment, a plurality of projecting pieces 57 for positioning is projected from a backside surface of the base portion 46 toward a backside. In detail, in this embodiment, the projecting pieces 57 are respectively disposed in the vicinities of middle portions in an extending direction of left-and-right side edges and lower ends of the base portion 46. In the case that the seat belt clamp apparatus 40 is attached to the standing upright portion 34b of the shell holder 34, each of the seat belt clamp apparatuses 40 are positioned by engaging the projecting pieces 57 with engaging grooves 59 provided in seat belt clamp apparatus installation-contemplated areas 58R and 58L (in Fig. 10) at the front face of the standing upright portion 34b. The engaging grooves 59 are provided in the same number as that of the projecting pieces 57 in positional relationships corresponding to each of the projecting pieces 57 of each of the seat belt clamp apparatuses 40.

The seat belt clamp apparatus 40R at the right side is installed at the seat belt clamp apparatus installation-contemplated area 58R at a right side in the front face of the standing upright portion 34b, and the seat belt clamp apparatus 40L at the left side is installed at the seat belt clamp apparatus installation-contemplated area 58L at a left side in the front face of the standing upright portion 34b.

Incidentally, as illustrated in Fig. 2 and Fig. 6(a), in this embodiment, in the seat belt clamp apparatus 40R at the right side, a length L₁ in an upper-and-lower direction of the projecting piece 57a provided at the lower end of the side edge at the right side of the base portion 46 is formed to be larger than a length L₂ in the upper-and-lower direction of the projecting piece 57b provided at the lower end of the side edge at the left side of the base portion 46. Further, although illustration is omitted, in the seat belt clamp apparatus 40L at the left side, a length in the upper-and-lower direction of the projecting piece 57b provided at the lower end of the side edge at the left side of the base portion 46 is formed to be larger than a length in the upper-and-lower direction of the projecting piece 57a provided at the lower end of the side edge at the right side of the base portion 46.

Incidentally, in this embodiment, a length in the upper-and-lower direction of the projecting piece 57b at the left side of the lower end of the seat belt clamp apparatus 40L at the left side is substantially equal to the length L₁ in the upper-and-lower direction of the projecting piece 57a at the right side of the lower end of the seat belt clamp apparatus 40R at the right side. The length in the upper-and-lower direction of the projecting piece 57a at the right side of the lower end of the seat belt clamp apparatus 40L at the left side is substantially equal to the length L₂ in the upper-and-lower direction of the projecting piece 57b at the left side of the lower end of the seat belt clamp apparatus 40R at the right side.

Corresponding to the above-described, as illustrated in Fig. 10, a length L₃ in the upper-and-lower direction of an engaging groove 59a in each of the engaging grooves 59 provided in the seat belt clamp apparatus installation-contemplated area 58R at the right side of the standing upright portion 34b, with which the projecting piece 57a at the right side of the lower end of the seat belt clamp apparatus 40R at the right side is engaged, is formed to be larger than a length L₄ in the upper-and-lower direction of the groove 59b, with which the projecting piece 57b at the left side of the lower end of the seat belt clamp apparatus 40R at the right side is engaged. Furthermore, a length L₅ in the upper-and-lower direction of the groove 59b in each of the engaging grooves 59 provided in the seat belt clamp apparatus installation-contemplated area 58L at the left side of the standing upright portion 34b, with which the projecting piece 57b at the left side of the lower end of the seat belt clamp apparatus 40L at the left side is engaged, is formed to be larger than a length L₆ in the upper-and-lower direction of the engaging groove 59a, with which the projecting piece 57a at the right side of the lower end of the seat belt clamp apparatus 40L at the left side is engaged.

In this embodiment, a length L₃ in the upper-and-lower direction of the engaging groove 59a at the right side of the lower end of the seat belt clamp apparatus installation-contemplated area 58R at the right side, and a length L₅ in the upper-and-lower direction of the engaging groove 59b at the left side of the lower end of the seat belt clamp apparatus installation-contemplated area 58L at the left side are respectively equal to or slightly larger than the length L₁ in the upper-and-lower direction of the projecting piece 57a at the right side of the lower end of the seat belt clamp apparatus 40R at the right side and the projecting piece 57b at the left side of the lower end of the seat belt clamp apparatus 40L at the left side. Moreover, the length L₄ in the upper-and-lower direction of the engaging groove 59b at the left side of the lower end of the seat belt clamp apparatus installation-contemplated area 58R at the right side, and the length L₆ in the upper-and-lower direction of the engaging groove 59a at the right side of the lower end of the seat belt clamp apparatus installation-contemplated area 58L at the left side are respectively equal to or slightly larger than the length L₂ in the upper-and-lower direction of the projecting piece 57b at the left side of the lower end of the seat belt clamp apparatus 40R at the right side, and the projecting piece 57a at the right side of the lower end of the seat belt clamp apparatus 40L at the left side, and are smaller than the aforementioned length L₁.

That is, in this embodiment, even when the seat belt clamp apparatus 40R at the right side is tried to be installed to the seat belt clamp apparatus installation-contemplated area 58L at the left side of the standing upright portion 34b, the projecting piece 57a at the right side of the lower end of the base portion 46 is not configured to be engaged with the engaging groove 59a at the right side of the lower end of the seat belt clamp apparatus installation-contemplated area 58L at the left side, and even when the seat belt clamp apparatus 40L at the left side is tried to be installed to the seat belt clamp apparatus installation-contemplated area 58R at the right side of the standing upright portion 34b, the projecting piece 57b at the left side of the lower end of the base portion 46 is not configured to be engaged with the engaging groove 59b at the left side of the lower end of the seat belt clamp apparatus installation-contemplated area 58R at the right side. Thereby, each of the seat belt clamp apparatuses 40R and 40L is prevented from being installed in a left and right reversed manner.

However, a relationship of the lengths in the upper and lower direction of each portion is not limited to the above-described. For example, the relationship of the lengths in the upper and lower direction of each portion may be reversed in left and right in relation to the aforementioned. Further, in each of the seat belt clamp apparatuses 40R and 40L, the lengths in the upper and lower direction of any of the projecting pieces 57 may be configured to be different. Alternatively, the length in the upper and lower direction of the projecting piece 57 of the seat belt clamp apparatus 40R at the right side and the length in the upper and lower direction of the projecting piece 57 of the seat belt clamp apparatus 40L at the left side may be configured to be different. The lengths in the upper and lower direction of the projecting pieces 57 at different positions between the seat belt clamp apparatus 40R at the right side and the seat belt clamp apparatus 40L at the left side may be configured to be different.

Incidentally, in the present invention, each of the seat belt clamp apparatuses 40R and 40L may be prevented from being installed in a left and right reversed manner by, for example, forming different thicknesses (widths in the left and right direction) W₁ and W₂ of these projecting pieces 57a and 57b other than forming the different lengths L₁ and L₂ in the upper and lower direction of the left and right projecting pieces 57a and 57b of each of the seat belt clamp apparatuses 40R and 40L as described above.

In this case, for example, in the seat belt clamp apparatus 40R at the right side, the thickness W₁ of the projecting piece 57a at the right side of the lower end thereof is formed to be larger than the thickness W₂ of the projecting piece 57b at the left side of the lower end. Further, in the seat belt clamp apparatus 40L at the left side, the projecting piece 57b at the left side of the lower end thereof is formed to have a thickness W₁ that is approximately the same thickness as that of the projecting piece 57a at the right side of the lower end of the seat belt clamp apparatus 40R at the right side, and the projecting piece 57a at the right side of the lower end thereof is formed to have a thickness W₂ that is approximately the same thickness as that of the projecting piece 57b at the left side of the lower end of the seat belt clamp apparatus 40R at the right side, which is smaller than the projecting piece 57a.

Furthermore, corresponding to the above, a width W₃ in a left and right direction of the engaging groove 59a at the right side of the lower end of the seat belt clamp apparatus installation-contemplated area 58R at the right side of the standing upright portion 34b and a width W₅ in the left and right direction of the engaging groove 59b at the left side of the lower end of the seat belt clamp apparatus installation-contemplated area 58L at the left side of the standing upright portion 34b are configured to be equal to or larger than the thickness W₁ of the projecting piece 57a at the right side of the lower end of the seat belt clamp apparatus 40R at the right side and the projecting piece 57b at the left side of the lower end of the seat belt clamp apparatus 40L at the left side. Moreover, a width W₄ in the left and right direction of the engaging groove 59b at the left side of the lower end of the seat belt clamp apparatus installation-contemplated area 58R at the right side and a width W₆ in the left and right direction of the engaging groove 59a at the right side of the lower end of the seat belt clamp apparatus installation-contemplated area 58L at the left side are configured to be equal to or larger than the thickness W₂ of the projecting piece 57b at the left side of the lower end of the seat belt clamp apparatus 40R at the right side, and the projecting piece 57a at the right side of the lower end of the seat belt clamp apparatus 40L at the left side, and to be smaller than the aforementioned thickness W₁.

By constructing as described above, even when the seat belt clamp apparatus 40R at the right side is tried to be installed to the seat belt clamp apparatus installation-contemplated area 58L at the left side of the standing upright portion 34b, the projecting piece 57a at the right side of the lower end of the base portion 46 is not configured to be engaged with the engaging groove 59a at the right side of the lower end of the seat belt clamp apparatus installation-contemplated area 58L at the left side, and even when the seat belt clamp apparatus 40L at the left side is tried to be installed to the seat belt clamp apparatus installation-contemplated area 58R at the right side of the standing upright portion 34b, the projecting piece 57b at the left side of the lower end of the base portion 46 thereof is not configured to be engaged with the engaging groove 59b at the left side of the lower end of the seat belt clamp apparatus installation-contemplated area 58R at the right side. Thereby, each of the seat belt clamp apparatuses 40R and 40L is prevented from being installed in a left and right reversed manner.

However, a relationship of the thickness of each portion is not limited to the above-described. For example, the relationship of the thickness of each portion may be reversed in left and right relative to the aforementioned. Further, in each of the seat belt clamp apparatuses 40R and 40L, the thickness of any of the projecting pieces 57 may be configured to be different. Alternatively, the thickness of the projecting piece 57 of the seat belt clamp apparatus 40R at the right side and the thickness of the projecting piece 57 of the seat belt clamp apparatus 40L at the left side may be configured to be different. The thicknesses of the projecting pieces 57 at different positions between the seat belt clamp apparatus 40R at the right side and the seat belt clamp apparatus 40L at the left side may be configured to be different.

The thicknesses and the lengths in the upper and lower direction of each of the projecting pieces 57 may be configured to be different, respectively.

Each of the seat belt clamp apparatuses 40R and 40L is disposed at each of the seat belt clamp apparatus installation-contemplated areas 58R and 58L at the right and left sides of the front face of the standing upright portion 34b in a manner such that each of the projecting pieces 57, 57a, and 57b thereof is engaged with the corresponding engaging grooves 59, 59a, and 59b, and is fixed to the standing upright portion 34b with fixing parts (illustration is omitted) such as bolts, rivets, or the like.

Next, an installation procedure of the child seat 30 provided with the thus constructed seat belt clamp apparatus 40 for use with a child seat will be explained.

The shell 31 and the shell holder 34 are separated in advance.

The shell holder 34 is mounted on the seat cushion 21 of the seat 20 first, and the standing upright portion 34b thereof is brought into contact with the seat back 22. Then, the seat belt 23 of the seat 20 is pulled around a front face side of the standing upright portion 34b, and the tongue is latched with the buckle apparatus. In this embodiment, as illustrated in Fig. 1(b), the shoulder belt 23a in the seat belt 23 is pulled around from the upper right to the lower left of the seat back 22.

Next, as illustrated in Fig. 3 and Fig. 8(a), the coupling-released state is formed by downwardly rotating the operating piece 53 of the coupling member 45 of the seat belt clamp apparatus 40R at the right side, and the shoulder belt 23a is inserted into the belt passageway 42 from the belt doorway 44 at the lower end side of the seat belt clamp apparatus 40R at the right side. At this moment, the shoulder belt 23a is hooked on the claw 48b overhanging from the lower end of the belt-receiving surface 48a into the belt passageway 42. Further, the looseness of the entire shoulder belt 23 is removed and the shoulder belt 23 is brought to a strained state. Thereafter, the operating piece 53 is upwardly rotated and is brought to the coupled state as illustrated in Fig. 2 and Fig. 6(a). Thereby, the belt doorway 44 is closed and the belt-locking apparatus 43 is brought to the belt-locking state as illustrated in Fig. 6(b), and the shell holder 34 is secured to the seat 20 via the seat belt 23.

Thereafter, as illustrated in Fig. 1(a), the shell 31 is coupled with the shell holder 34. Thereby, the child seat 30 is brought to a usable state.

In the case that the child seat 30 is taken away, the shell 31 is separated from the shell holder 34 first. Next, as illustrated in Fig. 3 and Fig. 8(a), the coupling-released state is formed by downwardly rotating the operating piece 53 of the coupling member 45 of the seat belt clamp apparatus 40R at the right side. Thereby, the belt-locking apparatus 43 is brought to the belt-unlocking state, and the belt doorway 44 is opened. Furthermore, the shoulder belt 23a is pulled out from the belt passageway 42 through the belt doorway 44. Thereafter, the coupling of the tongue of the seat belt 23 and the buckle apparatus is released and the seat belt 23 is taken off, and the shell holder 34 is taken away from above the seat 20.

As described above, in the seat belt clamp apparatus 40 for use with a child seat, the lower end portion of the base portion 46 of the frame body 41 and the lower end portion 48c of the belt-receiving portion 48 facing each other across the belt doorway 44 are coupled by the coupling member 45 after inserting the shoulder belt 23a into the belt passageway 42 from the belt doorway 44.

Hence, in the belt-locking state where the shoulder belt 23a is sandwiched between the belt-receiving portion 48 and the belt-pressing member 49, the lower end portion 48c of the belt-receiving portion 48 is blocked from being spaced apart from the base portion 46, and the shoulder belt 23a is strongly sandwiched by the belt-receiving portion 48 and the belt-pressing member 49.

As described above, in this embodiment, when the coupling member 45 is in the coupled state, the belt-locking apparatus 43 is in the belt-locking state, and when the coupling member 45 is brought to the coupling-released state, the belt-locking apparatus 43 is brought to the belt-unlocking state. Hence, another operation for allowing the belt-locking apparatus 43 to be in the belt-locking state and the belt-unlocking state is not necessary.

Incidentally, in this embodiment, although the installation procedure of the child seat 30 to the seat 20 for use in a vehicle, in which the shoulder belt 23a of the seat belt 23 is pulled around from the upper right to the lower left of the seat back 22, is explained, the child seat 30 can be installed to the seat 20 for use in a vehicle, in which the shoulder belt 23a is pulled around from the upper left to the lower right of the seat back 22. In this case, as described above, the shoulder belt 23a is clamped on the seat belt clamp apparatus 40L that is disposed at the left side of the front face of the standing upright portion. 34b after the seat belt 23 is pulled around the front face side of the standing upright portion 34b of the shell holder 34.

A clamp operation method for the shoulder belt 23a and a clamp-releasing operation method to the seat belt clamp apparatus 40L at the left side are the same as a clamp operation method for the shoulder belt 23a and a clamp-releasing operation method to the aforementioned seat belt clamp apparatus 40R at the right side.

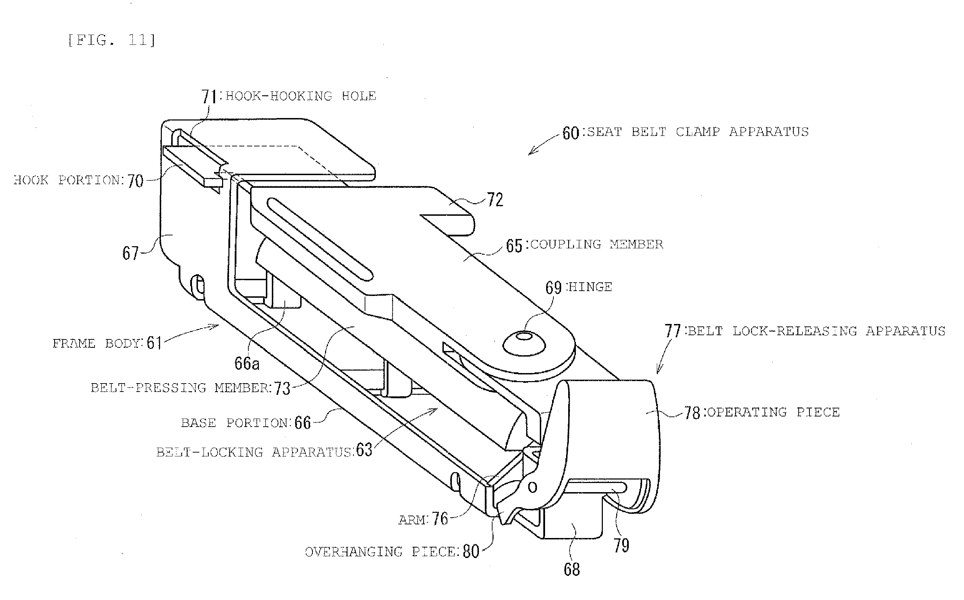

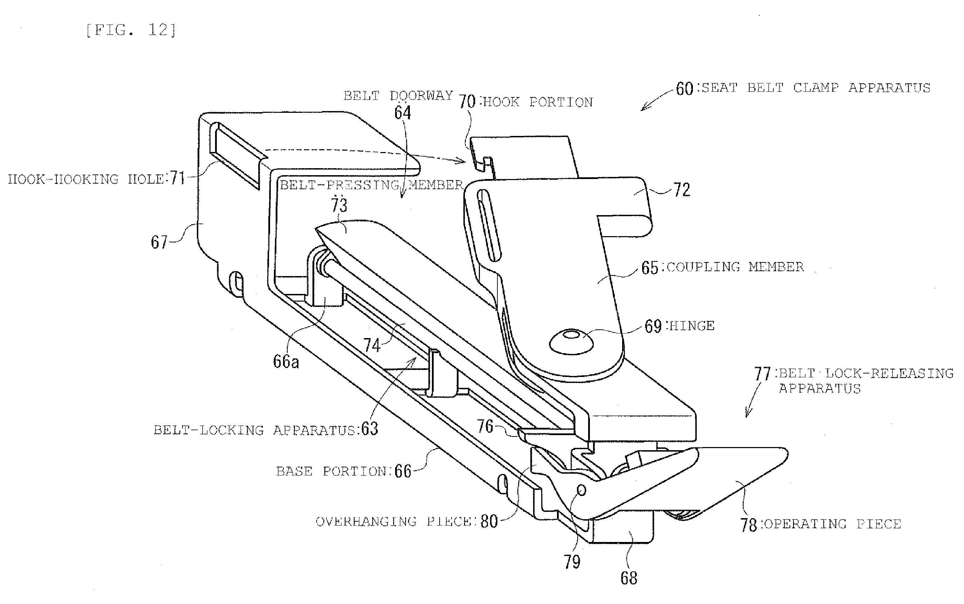

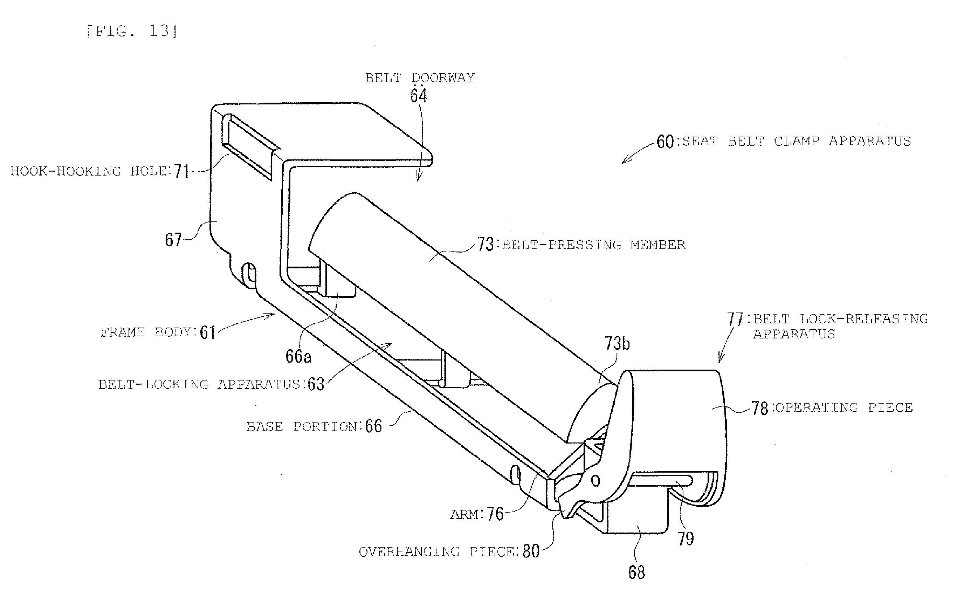

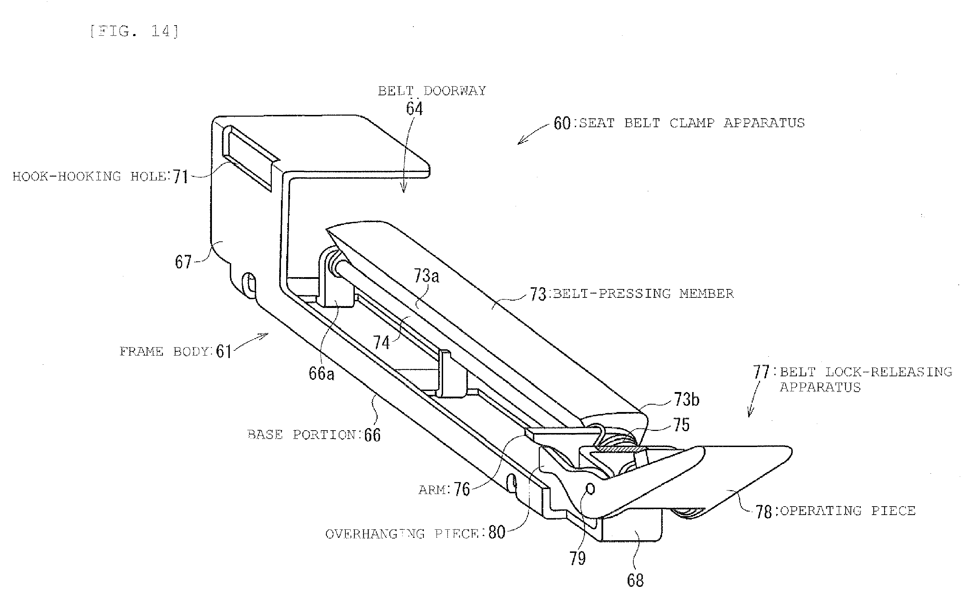

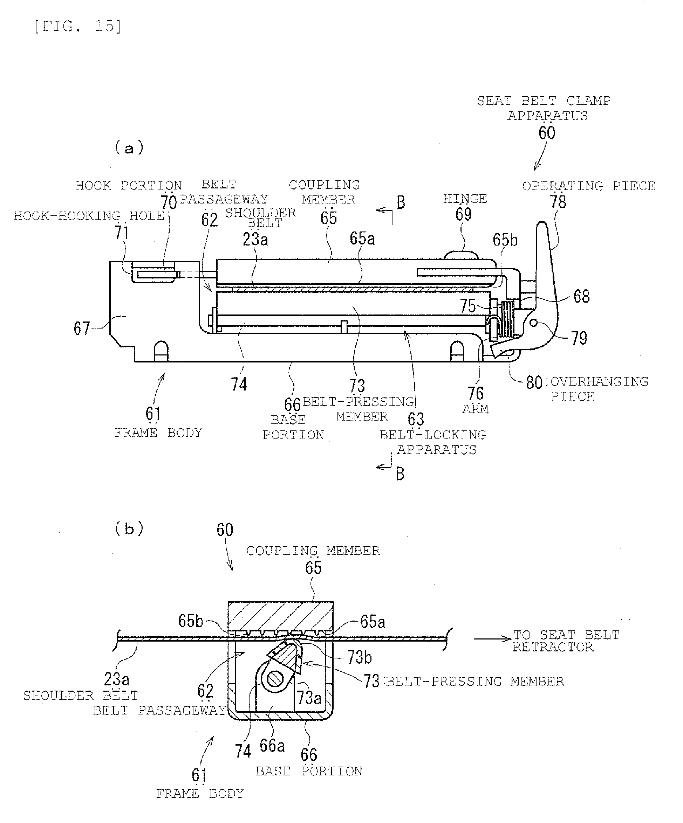

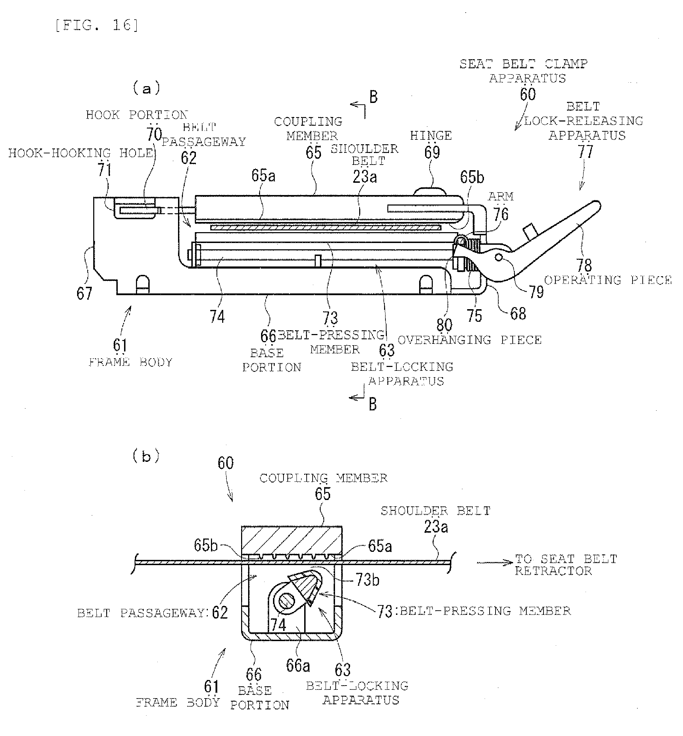

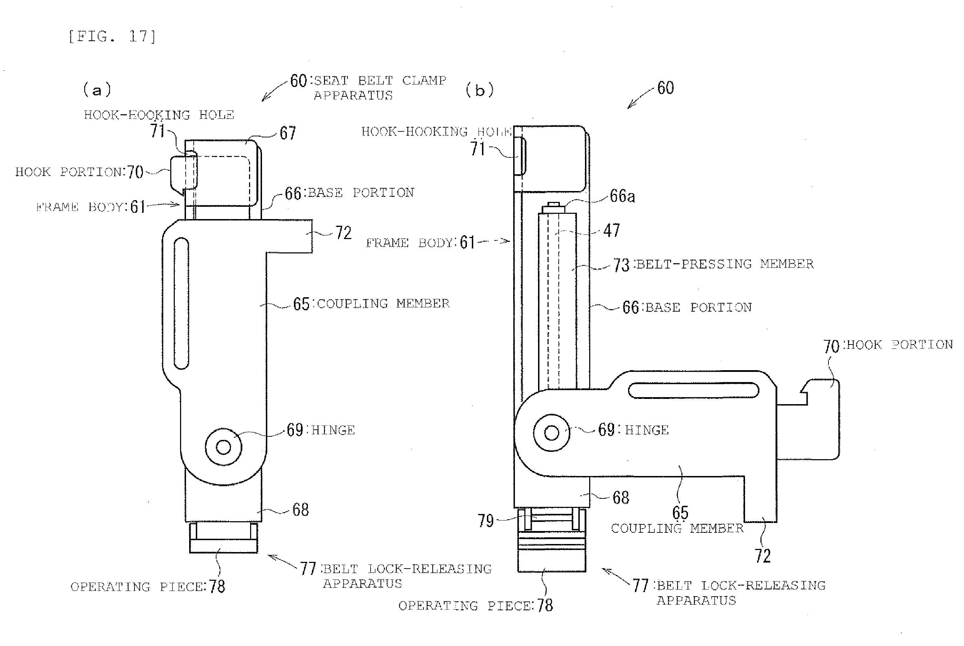

Fig. 11 is a perspective view illustrating a coupled state of end portions of a frame body of a seat belt clamp apparatus for use with a child seat according to another embodiment, Fig. 12 is a perspective view illustrating a coupling-released state of end portions of a frame body of the seat belt clamp apparatus, Fig. 13 is a perspective view illustrating a belt-locking state of the seat belt clamp apparatus, Fig. 14 is a perspective view illustrating a belt-unlocking state of the seat belt clamp apparatus, Fig. 15(a) is a side view illustrating the belt-locking state, Fig. 15(b) is a cross-sectional view taken along a line B-B of Fig. 15(a), Fig. 16(a) is a side view illustrating the belt-unlocking state, Fig. 16(b) is a cross-sectional view taken along a line B-B of Fig. 16(a), Fig. 17(a) is a front elevation illustrating a coupled state of the end portions of the frame body, and Fig. 17(b) is a front elevation illustrating the coupling-released state of the end portions of the frame body.

Incidentally, in Fig. 11 through Fig. 14, the seat belt clamp apparatus is illustrated such that an upper side of the paper surface is conformed to a front side of the child seat, a lower side of the paper surface is conformed to a rear side of the child seat, a back side of the paper surface is conformed to an upper side of the child seat, and a front side of the paper surface is conformed to a lower side of the child seat, respectively. Further, in Fig. 15(a) and Fig. 16(a), the seat belt clamp apparatus is illustrated such that the upper side of the paper surface is conformed to the front side of the child seat, the lower side of the paper surface is conformed to the rear side of the child seat, a left side of the paper surface is conformed to the upper side of the child seat, and a right side of the paper surface is conformed to the lower side of the child seat, respectively.

Although illustration is omitted, the seat belt clamp apparatus 60 for use with a child seat according to this embodiment is also provided two in number at left and right different positions at an upper part of the front face of the standing upright portion 34b of the shell holder 34 of the child seat 30. In Figs. 11 through 17, although the seat belt clamp apparatus 60 disposed at the right side of the front face of the standing upright portion 34b is illustrated, the seat belt clamp apparatus 60 that is constructed to be left-right symmetrical with that illustrated in Figs. 11 through 17 is installed at the left side of the front face of the standing upright portion 34b.

Similar to the above-described embodiment, in the case that the shoulder belt 23a of the seat belt 23 is pulled around from the upper right to the lower left of the seat back 22, the shoulder belt 23a is clamped on the seat belt clamp apparatus 60 at the right side of the front face of the standing upright portion 34b, and in the case that the shoulder belt 23a is pulled around from the upper left to the lower right of the seat back 22, the shoulder belt 23a is clamped on the seat belt clamp apparatus 60 at the left side of the front face of the standing upright portion 34b.

The seat belt clamp apparatus 60 according to this embodiment is also provided with a frame body 61 attached to the standing upright portion 34b, a belt passageway 62 for inserting the shoulder belt 23a, which is formed in the frame body 61, a belt-locking apparatus 63 for locking the shoulder belt 23a that is inserted through the belt passageway 62, a belt doorway 64 for feeding the shoulder belt 23a into and out from the belt passageway 62, a coupling member 65 for coupling the end portions of the frame body 61, which is facing each other across the belt doorway 64, and so forth.

In this embodiment, the frame body 61 is provided with a base portion 66 disposed along a front face of the standing upright portion 34b, an upper front side extending portion 67 extending from an upper end of the base portion 66 to a front side of the child seat 30, and a lower front side extending portion 68 extending from a lower end of the base portion 66 to a front side of the child seat 30. The frame body 61 has a forwardly facing C-shape where a portion between each of front end portions of the upper front side extending portion 67 and the lower front side extending portion 68 is forwardly opened.

In this embodiment, the coupling member 65 is provided for coupling each of the front end portions of the upper front side extending portion 67 and the lower front side extending portion 68. The coupling member 65 has a thin long belt plate shape and one end thereof is coupled with the front end portion of the lower front side extending portion 68 in a left-right rotatable manner via a hinge 69. A hook portion 70 is provided at the other end of the coupling member 65, and a hook-hooking hole 71 where the hook portion 70 is able to be engaged with is provided at the front end portion of the upper front side extending portion 67. A numeral 72 denotes a knob extending sideward from the other end of the coupling member 65.

By rotating the coupling member 65 in a manner so as to cause the other end side of the coupling member 65 to approach the upper front side extending portion 67 by grasping the knob 72 with hand and fingers, and engaging the hook portion 70 with the hook-hooking hole 71, a state where each of the front end portions of the upper front side extending portion 67 and the lower front side extending portion 68 is coupled is formed (coupled state). Further, from this coupled state, by disconnecting the hook portion 70 from the hook-hooking hole 71 and rotating the coupling member 65 in a direction opposite to that when the aforementioned each of the front end portions are coupled, and by separating the coupling member 65 from the upper front side extending portion 67, a state where the coupling of each of the front end portions of the upper front side extending portion 67 and the lower front side extending portion 68 are released is formed (coupling-released state).

Incidentally, in this embodiment, in the seat belt clamp apparatus 60 disposed at the right side of the front face of the aforementioned standing upright portion 34b, as illustrated in Fig. 12, and Figs. 17(a) and 17(b), the coupling member 65 is configured to be rotatable in a manner so as to approach the upper front side extending portion 67 from the right side when coupling operation is performed, and in a manner so as to be separated from the upper front side extending portion 67 toward the right side when coupling-releasing operation is performed. Moreover, although illustration is omitted, in the seat belt clamp apparatus 60 disposed at the left side of the front face of the standing upright portion 34b, the coupling member 65 is configured to be rotatable in a manner so as to approach the upper front side extending portion 67 from the left side when coupling operation is performed, and in a manner so as to be separated from the upper front side extending portion 67 toward the left side when coupling-releasing operation is performed.

In this coupled state, a space portion surrounded by the base portion 66 of the frame body 61, the upper front side extending portion 67 and the lower front side extending portion 68, and the coupling member 65 serves as the aforementioned belt passageway 62. A rear surface of the coupling member 65 facing the belt passageway 62 serves as a belt-receiving surface 65a sandwiching the shoulder belt 23a between a belt-pressing member 73, described later, and the same. As illustrated in Fig. 15(b) and Fig. 16(b), in this embodiment, a plurality of slip-preventing convex ridges 65b are projected from the belt-receiving surface 65a toward inside of the belt passageway 62.

In a coupling-released state where the hook portion 70 is disconnected from the hook-hooking hole 71 and the coupling member 65 is rotated in a direction separating from the upper front side extending portion 67, a portion between each of the front end portions of the upper front side extending portion 67 and the lower front side extending portion 68 serves as the belt doorway 64.

The belt-locking apparatus 63 is provided with the belt-pressing member 73 disposed in the belt passageway 62, a supporting shaft 74 for rotatably supporting the belt-pressing member 73 in a direction for contacting and separating from the belt-receiving surface 65a, and a coil spring 75 for biasing the belt-pressing member 73 in a direction for approaching the belt-receiving surface 65a. The shoulder belt 23a is passed through between the belt-pressing member 73 and the coupling member 65.

The supporting shaft 74 is extending in the belt passageway 62 approximately in an upper and lower direction substantially in parallel with the belt-receiving surface 65a of the coupling member 65 in the coupled state. An upper end side of the supporting shaft 74 is held by a bearing piece 66a standing upright from the aforementioned base portion 66, and a lower end side thereof is held by a bearing hole (illustration is omitted) provided in the lower front side extending portion 68.

In this embodiment, in the belt-pressing member 73, a base end portion 73a is supported in a rotatable manner in a front-back direction by the supporting shaft 74, and by that a tip end portion 73b is rotated from a lateral side to a front side of the supporting shaft 74 in a moving manner, the tip end portion 73b approaches the belt-receiving surface 65a and presses the shoulder belt 23a to the belt-receiving surface 65a.

Incidentally, in this embodiment, in the seat belt clamp apparatus 60 disposed at the right side of the front face of the aforementioned standing upright portion 34b, as illustrated in Fig. 15(b) and Fig. 16(b), the belt-pressing member 73 is also installed in the belt passageway 62 in a posture where the tip end portion 73b is inclined to a right side of the supporting shaft 74. Further, although illustration is omitted, in the seat belt clamp apparatus 60 disposed at the left side of the front face of the standing upright portion 34b, the belt-pressing member 73 is installed in the belt passageway 62 in a posture where the tip end portion 73b is inclined to a left side of the supporting shaft 74.

That is, in this embodiment, the belt-pressing member 73 is also rotated in a direction where the shoulder belt 23a, which is passed through the belt passageway 62 of the seat belt clamp apparatus 60, is pulled out from the seat belt retractor. Thereby, the tip end portion 73b approaches the belt-receiving surface 65a and presses the shoulder belt 23a to the belt-receiving surface 65a. Hence, in a state where the shoulder belt 23a is sandwiched between the belt-pressing member 73 and the belt-receiving surface 65a, even when the shoulder belt 23a is tried to be passed through the belt passageway 62 in a direction where the shoulder belt 23a is pulled out from the seat belt retractor, the belt-pressing member 73 also tends to be rotated in the same direction. Thereby, a portion between the tip end portion 73b of the belt-pressing member 73 and the belt-receiving surface 65a is tightly fastened, and thereby the shoulder belt 23a is blocked from being passed through in a pulling out direction from the seat belt retractor. Thus, a looseness of the shoulder belt 23a is assuredly prevented from occurring.

Hereinbelow, a state where the shoulder belt 23a is sandwiched between the belt-pressing member 73 and the belt-receiving surface 65a is referred to as the belt-locking state, and a state where the belt-pressing member 73 is rotated backward from the belt-locking state and separated from the belt-receiving surface 65a, and the sandwiching of the shoulder belt 23a is released is referred to as the belt-unlocking state.

As illustrated in Fig. 13 and Fig. 14, in this embodiment, an arm 76 extending from a lower end of the belt-pressing member 73 to a direction opposite to the tip end portion 73b of the belt-pressing member 73 sandwiching the supporting shaft 74 is also projected.

The coil spring 75 is disposed in a manner so as to surround a lower end of the supporting shaft 74, and one end thereof is hooked on a base portion 66, and the other end thereof is hooked on the vicinity of a root of the arm 76. The coil spring 75 is biasing the arm 76 to rotate backward. That is, in this embodiment, the coil spring 75 is also biasing the belt-pressing member 73 to rotate forward via the arm 76.

In this embodiment, a belt lock-releasing apparatus 77 for releasing the belt-locking state formed by the belt-locking apparatus 63 is provided.

The belt lock-releasing apparatus 77 is provided with an operating piece 78 one end of which is coupled with the lower front side extending portion 68 by a supporting shaft 79 in a manner so as to be rotatable in an upper/lower direction, and an overhanging piece 80 overhanging from a base end portion of the operating piece 78 to a backside of the arm 76. Thereby, the belt lock-releasing apparatus 77 can take a posture to be extended forward along a lower surface of the lower front side extending portion 68, and a posture to be extended downward from the lower front side extending portion 68.

In the belt-locking state illustrated in Fig. 13 and Fig. 15(a), the operating piece 78 is in the posture extending forward along the lower surface of the lower front side extending portion 68. Further, at this moment, the overhanging piece 80 is spaced apart from the arm 76. Hence, in this state, the belt-pressing member 73 is rotated forward by means of a biasing force of the coil spring 75, and the shoulder belt 23a is sandwiched between the tip end portion 73b thereof and the belt-receiving surface 65a. In addition, the arm 76 is in a state of being rotated backward in reverse relation to the tip end portion 73b.

Furthermore, the overhanging piece 80 rotates the arm 76 toward the front side while being in contact with the arm 76 from backside as illustrated in Fig. 13 to Fig. 14 by rotating the operating piece 78 downward as illustrated in Fig. 14 and Fig. 16(a) from the state illustrated in Fig. 13 and Fig. 15(a). Along with this operation, the belt-pressing member 73 is rotated backward, and the tip end portion 73b of the belt-pressing member 73 is spaced apart from the belt-receiving surface 65a. Thereby, the sandwiching of the shoulder belt 23a by the belt-pressing member 73 and the belt-receiving surface 65a is released.

In the case that the shoulder belt 23a is clamped on the thus constructed seat belt clamp apparatus 60, the coupling member 65 is brought to the coupling-released state first as illustrated in Fig. 12 and Fig. 17(b), and the shoulder belt 23a is inserted into the belt passageway 62 through the belt doorway 64. Then, the belt-unlocking state is formed by rotating the operating piece 78 downward, and in this state, the hook portion 70 is engaged with the hook-hooking hole 71 by rotating the coupling member 65 toward the upper front side extending portion 67 side. Thus, the coupled state illustrated in Fig. 11 and Fig. 17(a) is formed. Moreover, the looseness of the entire shoulder belt 23 is removed and the shoulder belt 23 is brought to the strained state. Thereafter, the belt-locking state illustrated in Fig. 13 and Fig. 15(a) is formed by upwardly rotating the operating piece 78.

In this seat belt clamp apparatus 60 for use with a child seat, each of the front ends of the upper front side extending portion 67 and the lower front side extending portion 68 of the frame body 61 is coupled by the coupling member 65 such that the belt doorway 64 is closed after the shoulder belt 23a is inserted into the belt passageway 62 from the belt doorway 64. Further, the shoulder belt 23a is sandwiched by the coupling member 65 and the belt-pressing member 73 of the belt-locking apparatus 63, and the shoulder belt 23a is locked.

Hence, in this belt-locking state, each of the front ends of the upper front side extending portion 67 and the lower front side extending portion 68 of the frame body 61 is coupled by the coupling member 65, and is prevented from being spaced apart from each other. Both ends of the coupling member 65 itself are supported by the upper front side extending portion 67 and the lower front side extending portion 68 via the hook portion 70 and the hinge 69, and the coupling member 65 itself is prevented from being spaced apart from the belt-pressing member 73. Therefore, the shoulder belt 23a is strongly sandwiched by the coupling member 65 and the belt-pressing member 73.

Incidentally, in the case that the shoulder belt 23a is taken off from the seat belt clamp apparatus 60, first, the belt-unlocking state is formed by rotating the operating piece 78 downward. Then, the hook portion 70 is taken off from the hook-hooking hole 71, and the coupling member 65 is rotated in a separating direction from the upper front side extending portion 67. Thus, the belt doorway 64 opened. Thereafter, the shoulder belt 23a is pulled out from the inside of the belt passageway 62 through the belt doorway 64.

The aforementioned each of the embodiments is illustrative of the present invention, and the present invention is not limited to the aforementioned each of the embodiments.

## Claims

1. A seat belt clamp apparatus for use with a child seat for securing the child seat to a vehicle seat by locking a seat belt of a vehicle that is inserted into the child seat, comprising:
a frame body mounted on the child seat;
a belt passageway for inserting the seat belt, formed in the frame body;
a belt-locking apparatus capable of entering a state where the seat belt inserted into the belt passageway is locked by sandwiching, and a belt-unlocking state allowing the seat belt to pass through; and
a belt doorway for feeding the seat belt into and out from the belt passageway, the seat belt clamp apparatus for use with the child seat further comprising:
a coupling member capable of entering a coupled state where end portions of the frame body facing each other across the belt doorway are coupled, and a coupling-released state where the belt doorway is in an open state.

2. The seat belt clamp apparatus for use with a child seat according to Claim 1, further comprising:
an operating piece for performing a coupling operation and a coupling-releasing operation for the coupling member; and
an interlocking apparatus for allowing the belt-locking apparatus to be in the belt-locking state when the coupling operation of the operating piece is performed.

3. The seat belt clamp apparatus for use with a child seat according to Claim 2, wherein the interlocking apparatus allows the belt-locking apparatus to be in the belt-unlocking state when the coupling-releasing operation of the operating piece is performed.

4. A child seat comprising the seat belt clamp apparatus for use with a child seat according to any one of Claims 1 through 3.
